# EUROPEAN PATENT SPECIFICATION

(11) **EP 4 514 765 B1**
(45) Date of publication and mention of the grant of the patent: **24.06.2026**
(21) Application number: 23725772.0
(22) Date of filing: 05.04.2023
(51) Int. Cl.: C04B 28/02, C04B 28/14, C04B 28/04, C04B 111/60, C04B 111/94

(54) **CEMENT-BASED ELECTRIC SURFACE HEATING STRUCTURE AND METHOD OF MANUFACTURING THE SAME**
ZEMENT-BASIERTE STRUKTUR ZUR ELEKTRISCHEN OBERFLÄCHENHEIZUNG UND VERFAHREN ZU DESSEN HERSTELLUNG
STRUCTURE DE CHAUFFAGE DE SURFACE ÉLECTRIQUE À BASE DE CIMENT ET SON PROCÉDÉ DE FABRICATION

(30) Priority: 25.04.2022 HU 2200128
(43) Date of publication of application: 05.03.2025
(73) Proprietor: Voltocrete Innovation Kft., 7622 Pécs (HU)
(72) Inventor: LUDVIG, Péter, 31.320-520 Belo Horizonte (BR); CSANÁDY, Dániel, 2890 Tata (HU)
(74) Representative: Pintz, György
(86) International application number: PCT/IB2023/053459
(87) International publication number: WO 2023/209469

(56) References cited:
- EP-A1- 3 838 864
- WO-A1-2010/059169
- WO-A1-2014/210007
- WO-A1-2018/232351
- AU-A1- 2020 384 570
- CN-A- 1 552 657
- CN-A- 108 643 374
- CN-A- 110 272 227
- DE-A1- 102012 000 767
- DE-A1- 102017 011 019
- JP-A- H01 148 738
- IIDA, T.; HIRANO, K.: "Electrically conductive hydraulic compositions", CHEMICAL ABSTRACTS, vol. 112, no. 2, 11238R, 8 January 1990 (1990-01-08), Columbus, Ohio, US, pages 233, XP000154310, ISSN: 0009-2258

## Description

The subject matter of the invention is a surface heating structure comprising a building structural unit, contacts, an electrical wire and a power source. The subject matter of the invention also relates to a method in which a post-hardening mixture is prepared from water, 15-30 mass% cement, 45-80 mass% aggregate and 2-10 mass% fibrous material, and optionally 0.1-5 mass% of an admixtures which improves the processing and/or the mechanical properties.

Chinese patent specification CN105588169 B discloses a heatable wall element comprising carbon heating wires and a decorative and insulating layer (e.g., polyurethane). The carbon heating wires are inserted into the wall element in the form of a twisted pair according to common design and connected to the regular household power supply. The solution described in Chinese utility model No. CN211736140 U is also an integrated wall heating unit with different layers. The possible embedded conductive elements mentioned here include graphene, carbon fibers, etc., and the honeycomb structure is used for simple and decorative cladding of wall surfaces depending on the intended use. The content of Chinese utility model CN213477340 U is a roof structure in which there is a heating layer between the thermal and water insulation. The accumulation of snow and ice layers can be prevented by laying heating resistance wires in the heating layer. Chinese patent application number CN110952675 A discloses a movable wall heater made of graphene. The heating unit is housed in a frame covered by a decorative panel that can be inserted into the base body. The international publication document WO2020057599 A1 deals with a solution that, in addition to the supporting, insulating, heating and decorative elements, also contains a heat-reflecting layer and emits infrared radiation in the range of 5-20 micrometers during operation.

The Chinese publication document No. CN107190615 A also discloses a graphene heating layer road coating. The description does not go beyond the layered structure, foundation and installation, and fabrication or composition of the prefabricated graphene panels **are not described.** The graphene panels are bonded together by folding and silicone glass glue. Chinese document CN107268437 A describes a solution substantially equivalent to the preceding, using embodiments in which graphene heating elements are incorporated into elements of highway overpasses.

Documentation of Chinese patent No. CN110904775 B discloses a heated road or walkway, detailing the conductive asphalt composition: 10-16 parts (unit mass) asphalt, 70-120 parts aggregate, 12-18 parts mineral powder, and conductive material. The conductive material consists of a polypyrrole-graphene composite and a conductive "shape memory" composite; the polypyrrole-graphene content is 3-10 mass%, and the conductive "shape memory" composite is 3-6 mass%. The goal of the mixture is to produce prefabricated elements. The various asphalt layers are bonded together with an emulsified asphalt adhesive.

The closest prior art solution is known from Chinese patent document CN108643374 A. The heated wall consists of a heating layer of graphene particles, a structural support layer, a decorative layer and a thermal insulation layer. The heating layer consists of electrically conductive particles (graphene) together with wires and an insulating layer covering them. A positive and a negative electrode are connected to the heating layer via an insulating layer, which is connected to the positive and negative poles of a power source. The solution is a controllable heating system with a temperature sensor placed outside the heating layer but close to it, and a safety switch.

The disadvantage of such solutions is that they are practically sandwich structures in which a precisely defined layer, e.g., a graphene layer, is the heat-dissipating layer.

None of the aforementioned solutions provide instructions for the production of an electrically powered surface heating system that can be produced inexpensively with a general and quick production technology of a building structure, e.g., with the help of a concrete mixer and the use of silicate based post-hardening agents.

The goal of the invention is to eliminate the shortcomings of previous solutions and to create a surface heating structure that allows heating and de-icing of exterior and interior surfaces with electric current. The goal is to create the structure, based on the primary and commonly used construction technology, economical, in harmony with the structure of the other parts of the building. The goal is for the mechanical properties of the panel heating structure, such as compressive strength and elasticity, to match the properties of the non-heating component with which it interacts, and even to form an independent load-bearing unit. The goal is to make the heating elements resistant to damage (small holes, cuts, cracks) and less sensitive, and to ensure a high level of comfort when heating rooms.

The basis of the idea of invention is the realization that if we proceed according to claim 1, we can obtain a better solution than before.

The general embodiment of the invention is represented by claim 1 while the individual embodiments are described by the sub-claims. According to the invention, there is provided an electric surface heating device which fulfils the set task and comprises a building structural unit, contacts, an electrical wire and a power source. The specificity of the invention is that the building structural unit consists of a post-hardening mixture of 15-30 mass% of cement or cementitious binder, 45-80 mass% of aggregates, 0.5-10 mass% of semiconductor and carbon-based aggregates and 2-10 mass% of fibrous material and optionally 0.1-5 mass% of admixtures which improve the processing and/or the mechanical properties, using water. **In** one possible embodiment, the building structural unit contains 0.1-5 mass% of an admixture which improves the processing and/or the mechanical properties. A control unit is connected to an electrical wire, and the control unit is linked to a temperature sensor.

The method of manufacturing an electric surface heating structure according to the invention where a post-hardening mixture of water, 15-30 mass% cement, 45-80 mass% aggregate and 2-10 mass% fibrous material is prepared is based on 0.5-10 mass% semiconductor and carbon-based aggregate and optionally 0.1-5 mass% of an admixtures which improves the processing and/or the mechanical properties being added to the mixture prior to post-consolidation, a post-consolidating building structural unit being formed by spreading or pouring the mixture into a formwork, and contacts being attached to the building structural unit during or after post-consolidation. **In** an alternative embodiment, the contacts are attached to the building structural unit in the form of points, strips or areas.

We will explain the invention in more detail with reference to drawings and examples of embodiments. The attached drawings show the following:
Figure 1 shows a schematic diagram of a structure equipped with point contact elements, in a position suitable for floor or ceiling heating,
Figure 2a is the detailed schematic diagram of corner arrangements in Figure 2b,
Figure 2b shows a schematic diagram of a structure equipped with a contact element along a strip suitable for wall heating,
Figure 3a is the detailed schematic diagram of corner arrangements in Figure 3b,
Figure 3b shows a schematic diagram of a structure equipped with a contact element along a strip suitable for wall heating,
Figure 4a is the detailed schematic diagram of corner arrangements in Figure 4b,
Figure 4b shows a schematic diagram of a structure equipped with a contact element along a surface suitable for wall heating,
Figure 5a is the detailed schematic diagram of corner arrangements in Figure 5b,
Figure 5b shows a schematic diagram of a structure with a mesh pattern with a contact element along a surface and suitable for wall heating.

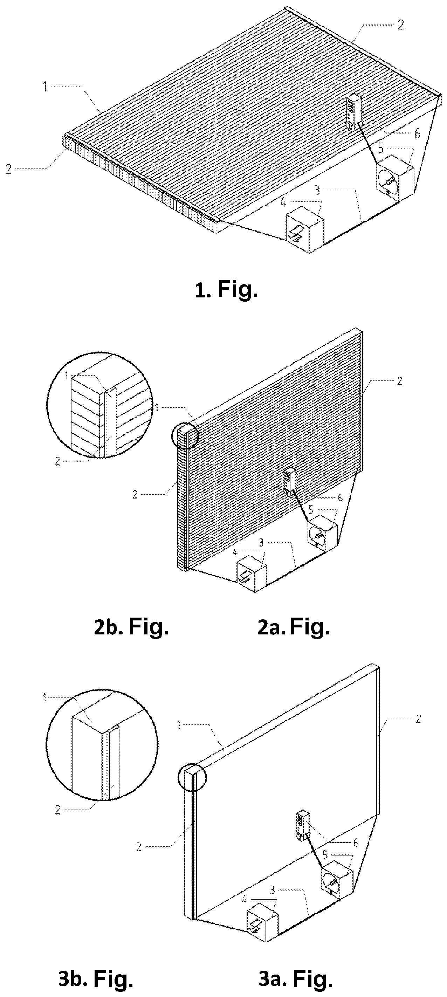

Figure 1 shows the building structural unit 1, contacts 2, electrical wire 3, power source 4, control unit 5, and temperature sensor 6. The contacts 2 are in punctual contact with the building structural unit 1. The control unit 5 is connected to the electrical wire 3, while the control unit 5 is connected to the temperature sensor 6. Of course, there can be multiple electrical wires 3 on each side, but only one is shown in Figure 1. The building structural unit 1 is shown in horizontal position, e.g., as a floor.

Figure 2b shows the building structural unit 1, contacts 2, electrical wire 3, power source 4, control unit 5, and temperature sensor 6. The building structural unit 1 is shown in an upright position, e.g., as a wall. The contacts 2 are in contact with the building structural unit 1 along a strip. This is shown in detail in Figure 2a, which highlights building structural unit 1 and contacts 2.

Figure 3b shows the building structural unit 1, contacts 2, electrical wire 3, power source 4, control unit 5, and temperature sensor 6. The building structural unit 1 is covered with an insulating paint layer 1a. The contacts 2 are in contact with the building structural unit 1 along a strip. This is shown in detail in Figure 3a, which highlights building structural unit 1 and contacts 2.

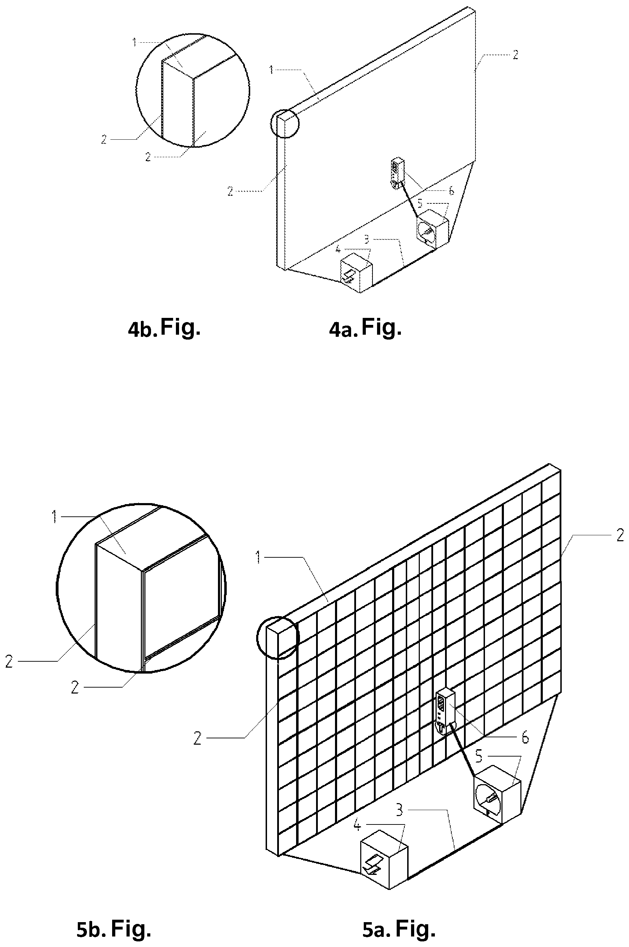

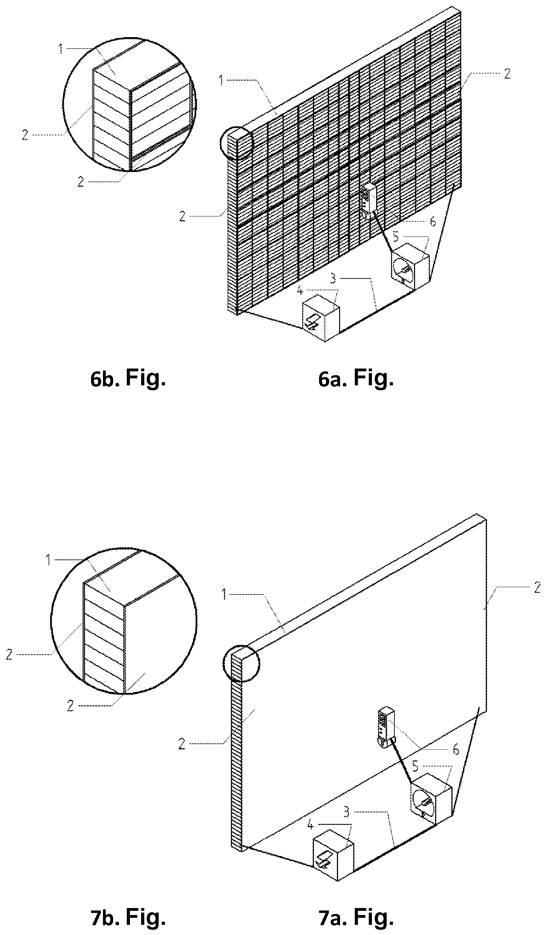

Figure 4b shows the building structural unit 1, contacts 2, electrical wire 3, power source 4, control unit 5, and temperature sensor 6. The contacts 2 are in surface contact with the building structural unit 1. The contact surface of the contacts 2 can also be designed with conductive paint. This is shown in detail in Figure 4a, which highlights building structural unit 1 and contacts 2. In addition to the building structural unit 1, a traditional building wall 1b is also shown cooperating with the building structural unit 1.

Figure 5b shows the building structural unit 1, contacts 2, electrical wire 3, power source 4, control unit 5, and temperature sensor 6. The contacts 2 are in surface contact with the building structural unit 1 and are arranged in a mesh pattern. In our invention, we consider the mesh fixation of the contacts 2 as surface fixation. This is shown in detail in Figure 5a, which highlights building structural unit 1 and contacts 2.

During the production process, we make a post-hardening mixture by adding conductive particles to the mixture before post-consolidation, and then form a post-consolidated building structural unit 1 by spreading or pouring the mixture into a formwork and attaching two contacts 2 to the building structural unit 1 during or after post-consolidation. The term "before post-consolidation" refers to the period before post-consolidation is completed, including the mixing time. The contacts 2 are attached or fastened to the building structural unit 1 in the form of points, strips or surfaces.

The material of the building structural unit 1 is an electrically conductive silicate composite material, and the binder used to make it is primarily cement, but may also be any equivalent material such as gypsum or the like commonly used in the construction industry. The aggregate is electrically conductive and non-conductive, for example quartz, limestone, steel slag, lead slag, foundry slag, magnetite. The conductive particles can be carbon-based semiconductors or aggregates, such as silicon, silicon carbide, titanium dioxide, nanostructured carbon (carbon nanotubes, carbon fibers, graphene oxide, carbon black, activated carbon, or other nanostructured carbon). The carbon-based aggregate is nanostructured carbon. The fibrous material can be an electrical conductor and a non-conductor, such as PVA, PE, steel, carbon, aramid, glass and copper. The admixtures are not obligatory, so their quantity is between 0-5 mass% (plasticizer, air entraining agents, stabilizers, hardness regulators). The properties of the composite electrical conductor are not achieved by a specific type of added fiber or particle, but by a mixture composed of different types, materials, sizes, and shapes of conductive fibers and particles that cooperate with each other. The mass% refers to the finished composite material. Some structural elements can be 3D printed.

In the production of electrically conductive material, by mixing the dry powder or granules with a suitable amount of water or equivalent binder-promoting material, a malleable mass can be formed which can be worked and shaped for as long as required from a technological point of view. After consolidation, it has compressive strength, modulus of elasticity, and other mechanical properties similar to those of traditional mortar, screed, or structural concretes, as well as long life. Furthermore, it cooperates with structures made of these traditional materials, forming an organic unit with them. The material is chemically, physically and mechanically compatible with the materials traditionally used for floors and walls: concrete, mortar, screed, bricks, masonry elements, etc. The hardened material, because of its electrical conductivity, and reasonable resistance, generates heat when exposed to direct or alternating current, so it can be used as a heating element both indoors and outdoors. Its adjustability makes it suitable for assembly with any layout and/or cross-section elements and any dimensions when used on site. Therefore, it is a material that can be used on site as a masonry, ceiling or wall material or coating layer thereof, such as a concrete screed, plaster. In addition, the conductive composite material can be used to make prefabricated structural and non-structural elements, such as wall elements, floor, wall and ceiling elements, remaining precast concrete panel and any other modularly manufactured cladding or structural elements.

### Example 1: Outdoor de-icing pavement

a. Cement 25%
b. Water 9%
ca. Conductive aggregate 51% (steel 25%; magnetite 26%)
cb. Non-conductive aggregate 4%.
d. Semiconductor and carbon-based aggregates 2% (nanostructured carbon 0.6%; silicon 0.4%; silicon carbide 0.3%; titanium dioxide 0.7%)
e. Macro fibers 6% (PVA 3%; steel 1%, carbon 2%)
f. Admixtures 3% (plasticizer 1.5%, air entraining agent 1%, setting time modifier 0.5%)

### Example 2: Heatable interior plaster

a. Cement 15%
b. Water 6%
c. Non-conductive aggregate 65%
d. Semiconductor and carbon-based aggregates 8% (nanostructured carbon 3%; silicon 2%; silicon carbide 1%; titanium dioxide 2%)
e. Macro fibers 5% (PE 3%; steel 1%, carbon 1%)
f. Admixtures 2% (plasticizer 0.5%, setting time modifier 1.5%)

### Example 3: Heatable masonry element

a. Cement 20%
b. Water 7%
ca. Conductive aggregate 10% (steel 6%; magnetite 4%)
cb. Non-conductive aggregate 46%
d. Semiconductor and carbon-based aggregates 9% (nanostructured carbon 4%; silicon 2%; silicon carbide 1%; titanium dioxide 2%)
e. Macro fibers 3% (glass 1%; steel 1%, carbon 1%)
f. Admixtures 5% (plasticizer 1,5%, air entraining agent 2%, setting time modifier 1,5%)

For outdoor de-icing, the frost resistance of the material is also an important requirement, which is why the cement content is 25-30 mass%. In this case, it is not necessary to reach a high temperature, so the aggregate can contain 60-65 mass% silicate-based material, 6-8 mass% fibrous material to increase bending stiffness, and 4 mass% semiconductor material. With an addition of 5 mass% of admixtures, we contribute to good frost resistance.

For an installed composite (e.g., flooring), wherein strength is required but not the primary concern, the binder content is 20-25mass%. The goal here is to achieve a higher temperature while the material remains load-bearing, so the percentage of conductive aggregates is higher (45-65 mass%) than that of non-conductive aggregates (5-15 mass%). The ratio of semiconductor and carbon-based aggregates is increased (3-10 mass%) to achieve more efficient heating. The ratio of electrically conductive and non-conductive fibers is 3-6 mass%. To achieve good workability, the proportion of admixtures is 0.5-2 mass%, and the proportion of water is 4-8 mass%.

In the interior layer (e.g., plaster), wherein the strength requirement is secondary, the binder content is reduced to 15-20 mass%. In this case, conductivity is also important, but so is the relatively low self-weight, so the percentage of conductive aggregates is lower (0-20 mass%), while the percentage of non-conductive aggregates is higher (40-70 mass%). The ratio of semiconductor and carbon-based aggregates is increased by 2-10 mass% for efficient heating. The ratio of electrically conductive and non-conductive fibers, such as macrofibers, is 2-10 mass%, depending on the base surface. For the requirements of adequate consistency and thixotropy, the percentage of admixtures is 1-5mass%, and 5-10mass% of water is required for good application.

If the total added aggregate (45-70 mass%) is 100% nonconductive, the ratio of semiconductors to binder by mass (5-15 mass%) and the fibrous material should be selected mainly from conductive materials (3-10 mass%) with a binder content of 20-28 mass%.

It is important that the composite is conductive within itself, so that if a macroscopic piece (e.g., 10 mm x 10 mm x 10 mm) is randomly removed from the block of material, its properties will be only marginally different from those of a randomly removed sample of material elsewhere. The different parts or layers that perform different functions cannot be separated. The installation technology of the conductive composite material or prefabricated element is the same as, or can be easily adapted to, that used for the construction of the other non-heating structural elements and/or coverings. Examples include masonry structures, modular manufactured elements, cast monolithic structures (floor, wall, ceiling) and prefabricated element construction technology. The conductive composite material can be installed in the same construction pace as these structures, i.e. simultaneously or later as a plaster, other cladding element or as part of it, and forms an organic unit with the supporting/receiving structure. The simplicity of the installation of the heating elements makes the material suitable for the professionals installing other structural and/or covering elements to install the heating system at the same time without involving other professionals.

The composition of the material can be modified according to the requirements of the field of application (screed, mortar, plaster, concrete, etc.) by choosing the intended dosage of other components (binders, aggregates, admixtures, fibres) while maintaining the conductivity. Due to its conductive properties, it is very resistant to accidental or intentional damage or disruption (holes, cuts, cracks), being able to maintain the electrical conductivity of the element bypassing the damaged part.

**In** the construction of the installation, the building structural units 1 are installed simultaneously or subsequently with the construction of the structure, using the same or different technology as for the rest of the structure, and the connections, namely the contacts 2 and the electrical wires 3, are also made. The system is completed by the installation of the control unit 5 and the temperature sensors 6, and by the connection of the corresponding DC or AC power sources 4. The transmission of electric current to the building structural unit 1 can be achieved with different types of contacts 2 (electrodes). These include, but are not limited to: point embedded electrodes, strip embedded electrodes, surface coatings, or an electrically conductive grid embedded parallel to the surface, which can also be formed from the reinforcing steel of the structure. However, it is important to note that in this case, the material of the heating element is the heat transfer medium, and the reinforcing steel only provides the electrical connection.

In the application of the invention, when the temperature of the surface/air to be heated/de-iced is below the set temperature detected by the temperature sensor, the power control unit applies electric current to the structural heating elements, i.e., the building structural units 1, causing them to generate heat on the surface to be heated/de-iced. If the temperature of the surface/air reaches the setpoint determined by the temperature sensor, the control unit 5 interrupts the power supply. If the temperature drops below the desired value again, the control unit 5 energizes the system again so that the building structural units 1 generate heat again. To maintain the appropriate temperature, the system repeatedly applies voltage to the building structural units 1.

The invention has many advantages. It enables heating and de-icing of exterior and interior surfaces by means of electric current. The structure can be created based on the primary and typically used building technology, economically, in harmony with the structure of the other parts of the building. The mechanical properties of the surface heating structure, such as compressive strength and modulus of elasticity, are the same as those of the non-heating building structure with which it interacts, and can even be a load-bearing unit in its own right. Structural units are resistant to damage (small holes, cuts, cracks) and trouble-proof and provide a high level of comfort when heating interiors.

## Claims

1. Electric surface heating structure, comprising a building structural unit (1), contacts (2), electrical wire (3) and power source (4), **characterized in that** the building structural unit (1) consists of a post-hardening mixture of 15-30 mass% of cement or cementitious binder, 45-80 mass% of aggregates, 0.5-10 mass% of semiconductor and carbon-based aggregates, and 2-10 mass% of fibrous material, optionally 0.1-5 mass% of admixtures which improve the processing and/or the mechanical properties, using water.

2. The structure according to claim 1, **characterized in that** the building structural unit (1) contains 0.1-5 mass% of admixtures which improve the processing and/or the mechanical properties.

3. The structure according to claim 1 or 2, **characterized in that** a control unit (5) is connected to an electrical wire (3), and the control unit (5) is linked to a temperature sensor (6).

4. The structure according to any of the claims 1-3, **characterized in that** the aggregate is an electrically conductive aggregate and a non-conductive aggregate.

5. Method for producing an electric surface heating structure according to claims 1-4, wherein a post-hardening mixture of water, 15-30 mass% cement, 45-80 mass% aggregates and 2-10 mass% fibrous material is produced, **characterized in that** 0.5-10 mass% of semiconductor and carbon-based aggregates and optionally 0.1-5 mass% of admixtures which improve the processing and/or the mechanical properties are added to the mixture before post-consolidation, a post-hardening building structural unit (1) is formed by spreading or pouring the mixture into a formwork and contacts (2) are attached to the building structural unit (1) during or after post-consolidation.

6. The method according to claim 5, **characterized in that** the contacts (2) are attached pointwise to the building structural unit **(1).**

7. The method according to claim 5, **characterized in that** the contacts (2) are attached in strips to the building structural unit (1).

8. The method according to claim 5, **characterized in that** the contacts (2) are attached along the surface to the building structural unit (1).

## Patentansprüche

1. Elektrische Oberflächenheizstruktur, umfassend eine Baustruktureinheit (1), Kontakte (2), elektrische Leitung (3) und Stromquelle (4), **dadurch gekennzeichnet, dass** die Baustruktureinheit (1) aus einer nachhärtenden Mischung von 15-30 Masse% Zement oder zementartigem Bindemittel, 45-80 Masse% Zuschlagstoffe, 0,5-10 Masse% Halbleiter- und kohlenstoffbasierte Zuschlagstoffe und 2-10 Masse% Fasermaterial, optional 0,1-5 Masse% Zusatzmittel, die die Verarbeitung und/oder die mechanischen Eigenschaften verbessern, unter Verwendung von Wasser besteht.

2. Struktur nach Anspruch 1, **dadurch gekennzeichnet, dass** die Baustruktureinheit (1) 0,1-5 Masse% Zusatzmittel enthält, die die Verarbeitung und/oder die mechanischen Eigenschaften verbessern.

3. Struktur nach Anspruch 1 oder 2, **dadurch gekennzeichnet, dass** eine Steuereinheit (5) mit einer elektrischen Leitung (3) verbunden ist und die Steuereinheit (5) mit einem Temperatursensor (6) verbunden ist.

4. Struktur nach einem der Ansprüche 1-3, **dadurch gekennzeichnet, dass** der Zuschlagstoff ein elektrisch leitfähiger Zuschlagstoff und ein nicht-leitfähiger Zuschlagstoff ist.

5. Verfahren zur Herstellung einer elektrischen Oberflächenheizstruktur nach den Ansprüchen 1-4, wobei eine nachhärtende Mischung aus Wasser, 15-30 Masse% Zement, 45-80 Masse% Zuschlagstoffe und 2-10 Masse% Fasermaterial hergestellt wird, **dadurch gekennzeichnet, dass** 0,5-10 Masse% Halbleiter- und kohlenstoffbasierte Zuschlagstoffe und optional 0,1-5 Masse% Zusatzmittel, die die Verarbeitung und/oder die mechanischen Eigenschaften verbessern, der Mischung vor der Nachverfestigung zugegeben werden, eine nachhärtende Baustruktureinheit (1) durch Ausbreiten oder Gießen der Mischung in eine Schalung gebildet wird und Kontakte (2) während oder nach der Nachverfestigung an der Baustruktureinheit (1) angebracht werden.

6. Verfahren nach Anspruch 5, **dadurch gekennzeichnet, dass** die Kontakte (2) punktweise an der Baustruktureinheit (1) angebracht werden.

7. Verfahren nach Anspruch 5, **dadurch gekennzeichnet, dass** die Kontakte (2) streifenförmig an der Baustruktureinheit (1) angebracht werden.

8. Verfahren nach Anspruch 5, **dadurch gekennzeichnet, dass** die Kontakte (2) entlang der Oberfläche an der Baustruktureinheit (1) angebracht werden.

## Revendications

1. Structure de chauffage électrique de surface, comprenant une unité structurelle de bâtiment (1), des contacts (2), un fil électrique (3) et une source d'alimentation (4), **caractérisée en ce que** l'unité structurelle de bâtiment (1) est constituée d'un mélange post-durcissant de 15-30 % en masse de ciment ou de liant cimentaire, 45-80 % en masse d'agrégats, 0,5-10 % en masse d'agrégats semi-conducteurs et à base de carbone, et 2-10 % en masse de matériau fibreux, éventuellement 0,1-5 % en masse d'adjuvants qui améliorent le traitement et/ou les propriétés mécaniques, en utilisant de l'eau.

2. Structure selon la revendication 1, **caractérisée en ce que** l'unité structurelle de bâtiment (1) contient 0,1-5 % en masse d'adjuvants qui améliorent le traitement et/ou les propriétés mécaniques.

3. Structure selon la revendication 1 ou 2, **caractérisée en ce que** une unité de commande (5) est connectée à un fil électrique (3), et l'unité de commande (5) est reliée à un capteur de température (6).

4. Structure selon l'une quelconque des revendications 1-3, **caractérisée en ce que** l'agrégat est un agrégat électriquement conducteur et un agrégat non conducteur.

5. Procédé de production d'une structure de chauffage électrique de surface selon les revendications 1-4, dans lequel un mélange post-durcissant d'eau, 15-30 % en masse de ciment, 45-80 % en masse d'agrégats et 2-10 % en masse de matériau fibreux est produit, **caractérisé en ce que** 0,5-10 % en masse d'agrégats semi-conducteurs et à base de carbone et éventuellement 0,1-5 % en masse d'adjuvants qui améliorent le traitement et/ou les propriétés mécaniques sont ajoutés au mélange avant la post-consolidation, une unité structurelle de bâtiment post-durcissante (1) est formée en étalant ou en versant le mélange dans un coffrage et des contacts (2) sont fixés à l'unité structurelle de bâtiment (1) pendant ou après la post-consolidation.

6. Procédé selon la revendication 5, **caractérisé en ce que** les contacts (2) sont fixés ponctuellement à l'unité structurelle de **bâtiment (1).**

7. Procédé selon la revendication 5, **caractérisé en ce que** les contacts (2) sont fixés en bandes à l'unité structurelle de bâtiment (1).

8. Procédé selon la revendication 5, **caractérisé en ce que** les contacts (2) sont fixés le long de la surface à l'unité structurelle de bâtiment (1).
